# EUROPÄISCHE PATENTSCHRIFT

(11) **EP 3 969 232 B1**
(45) Veröffentlichungstag und Bekanntmachung des Hinweises auf die Patenterteilung: **01.05.2024**
(21) Anmeldenummer: 20726354.2
(22) Anmeldetag: 13.05.2020
(51) Int. Cl.: B25J 9/16, B21D 43/24, B25J 13/08, B25J 15/00, B25J 15/06, B25J 19/02, B65G 47/91, B65G 59/04, B65G 59/08, B65G 61/00, B21D 43/10, B21D 43/18

(54) **ROBOTERGREIFER, INDUSTRIEROBOTER, HANDHABUNGSSYSTEM UND VERFAHREN ZUR ENTNAHME PLATTENFÖRMIGER WERKSTÜCKE VON EINEM STAPEL**
ROBOT GRIPPER, INDUSTRIAL ROBOT, HANDLING SYSTEM, AND METHOD FOR REMOVING PANEL-SHAPED WORKPIECES FROM A STACK
PRÉHENSEUR DE ROBOT, ROBOT INDUSTRIEL, SYSTÈME DE MANIPULATION ET PROCÉDÉ POUR PRÉLEVER DES PIÈCES EN FORME DE PLAQUE DANS UN EMPILEMENT

(30) Priorität: 16.05.2019 DE 102019112867
(43) Veröffentlichungstag der Anmeldung: 23.03.2022
(73) Patentinhaber: HOMAG Automation GmbH, 09638 Lichtenberg (DE)
(72) Erfinder: LUDWIG, Jens, 09600 Oberschöna (DE); BRUSKY, Stefan, 09638 Lichtenberg (DE); ZILLER, Dominik, 09600 Oberschöna (DE)
(74) Vertreter: Hoffmann Eitle
(86) Internationale Anmeldenummer: PCT/EP2020/063297
(87) Internationale Veröffentlichungsnummer: WO 2020/229522

(56) Entgegenhaltungen:
- EP-A1- 3 292 962
- WO-A2-2018/063100
- JP-A- S5 359 592
- JP-A- H05 139 554
- JP-A- 2011 003 701
- US-A1- 2007 200 378
- US-A1- 2013 110 280
- US-A1- 2013 127 192
- US-A1- 2014 277 711
- US-A1- 2015 209 964
- US-A1- 2017 129 109
- US-A1- 2017 225 330
- US-A1- 2018 215 540

## Beschreibung

### Technisches Gebiet

Die Erfindung betrifft einen Robotergreifer, der dazu ausgebildet ist, mit einem Industrieroboter verbunden zu werden. Darüber hinaus betrifft die Erfindung einen Industrieroboter mit diesem Greifer, und ein Handhabungssystem, das diesen Industrieroboter aufweist. Zudem betrifft die Erfindung ein Verfahren zur Entnahme plattenförmiger Werkstücke, die bevorzugt zumindest abschnittsweise aus Holz, Holzwerkstoffen, Kunststoff, Aluminium oder dergleichen bestehen, von einem Stapel.

### Stand der Technik

In der Möbel- und Bauelementeindustrie ist gegenwärtig ein Anstieg der Nachfrage nach individualisierten Produkten erkennbar. So kaufen Endverbraucher beispielsweise vermehrt Einrichtungsgegenstände, die individuell an die Abmaße eines konkreten Raums angepasst sind, oder die eine bestimmte Farb- und/oder Werkstoffkombination aufweisen. Trotz eines hohen Individualisierungsgrads und der damit verbundenen geringen Losgröße können derartige Produkte im industriellen Maßstab gefertigt werden.

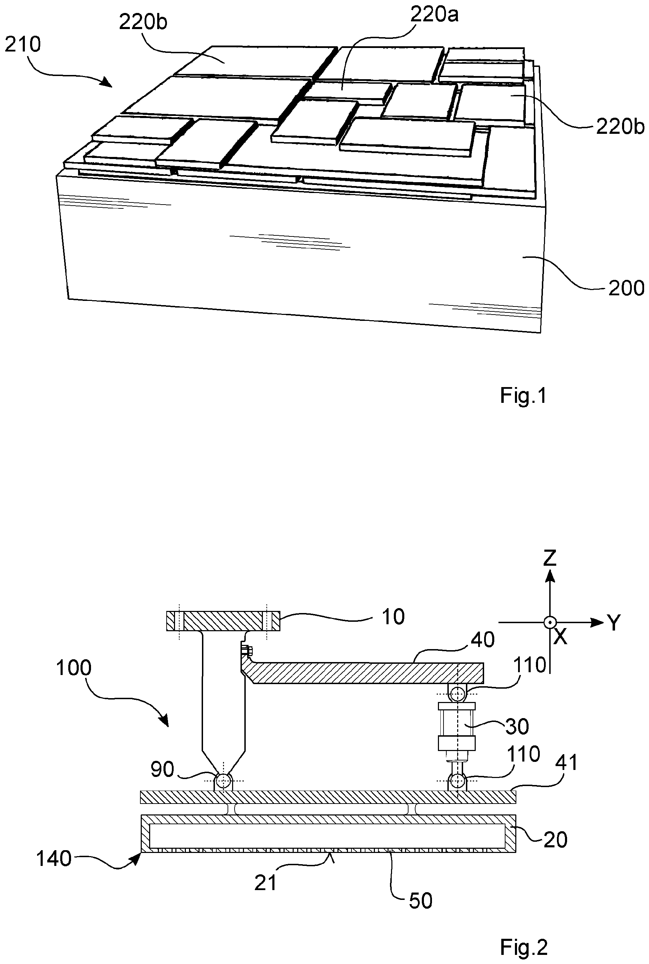

Im beispielhaften Fall eines Möbelstücks ist es denkbar, zunächst alle benötigten Platten zu konfektionieren, und diese sodann auf einer Lagereinrichtung zu stapeln. Da ein Möbelstück meist aus einer Vielzahl verschiedenartiger Platten besteht, bilden die auf der Lagereinrichtung gestapelten, konfektionierten Platten meist einen ungleichmäßigen Stapel. Ein ungleichmäßiger Stapel, auch chaotischer Stapel genannt, weist einzelne Lagen auf, deren Zusammensetzung und/oder Anordnung sich unterscheidet. Wie in Fig. 1 dargestellt, kann ein chaotischer Stapel 210 auf einer Lagereinrichtung 200 Werkstücke 220b aufweisen, die in einem Randabschnitt des chaotischen Stapels 210 liegen. Zudem kann ein chaotischer Stapel 210 Werkstücke 220a aufweisen, die in einem mittigen Abschnitt des chaotischen Stapels 210 liegen. Zudem wird deutlich, dass die Werkstücke 220 des chaotischen Stapels 210 verschiedene Abmaße aufweisen können.

Um automatisiert Teile von einem chaotischen Stapel zu entnehmen (d.h. zur Plattenvereinzelung), können Industrieroboter, beispielsweise Portalroboter oder Sechsachsroboter, mit Sauggreifern eingesetzt werden. Ein Sauggreifer ist dazu ausgebildet, Gegenstände durch Unterdruck aufzunehmen und zu halten. Es hat sich jedoch gezeigt, dass einzelne, insbesondere einzelne übereinanderliegende Platten aufgrund von Adhäsionseffekten oder anderen Oberflächenhaftungseffekten schwierig zu vereinzeln sind. Konkret besteht die Gefahr, zusammen mit einer Platte auch die darunterliegende Platte anzuheben. Dieser Effekt wird verstärkt, wenn die anzusaugenden Werkstücke eine gewisse Porosität aufweisen, den Unterdruck des Greifers also zumindest teilweise an darunterliegende Platten weitergeben.

Um dennoch eine einzelne Platte von einem chaotischen Stapel entnehmen zu können, hat es sich bewährt, die zu entnehmende Platte unter Verwendung eines Sauggreifers von der darunterliegenden Platte herunterzuschieben. Die Verschiebung der zu entnehmenden Platte erfolgt dabei meist parallel zur Deckfläche der darunterliegenden Platte. Jedoch müssen bei diesem Verfahren zuerst diejenigen Platten entnommen werden, die in einem Randabschnitt des chaotischen Stapels liegen.

Erst nach der Entnahme dieser außenliegenden Platten steht genügend Platz zur Verfügung, um auch die innenliegenden Platten durch Verschieben zu entnehmen. Somit ist eine Entnahmereihenfolge vorgegeben, die nicht zwangsweise der optimalen Reihenfolge entspricht.

Ein Robotergreifer gemäß dem Oberbegriff des Anspruchs 1 ist aus der US 2017/129109 A1 bekannt.

Ein Robotergreifer ist außerdem auch aus der US 2014/277711 A1, der US 2018/21 5540 A1, der JP S53 59592 A, der WO 2018/0631 00 A2, der JP H05 1 39554 A, der EP 3 292 962 A1, der US 2007/200378 A1, der JP 2011 003701 A, der US 2015/209964 A1, der US 2013/1 271 92 A1 und der US 2013/11 0280 A1 bekannt.

### Darstellung der Erfindung

Aufgabe der Erfindung ist es, eine einfache und effiziente Möglichkeit zur Entnahme plattenförmiger Werkstücke von einem Stapel bereitzustellen.

Erfindungsgemäß wird diese Aufgabe durch einen Robotergreifer nach Anspruch 1, einen Industrieroboter nach Anspruch 9, ein Verfahren nach Anspruch 10 und ein Handhabungssystem nach Anspruch 14 gelöst. Bevorzugte Ausführungsformen sind in den Unteransprüchen angegeben.

Ein erfindungsgemäßer Robotergreifer weist eine Aufnahme auf, die dazu ausgebildet ist, mit einem Industrieroboter verbunden zu werden. Zudem weist der Robotergreifer mindestens eine Saugeinheit auf, die dazu ausgebildet ist, mit einer Vakuumquelle verbunden zu werden. Die Saugeinheit weist eine Saugfläche auf, an der ein bevorzugt plattenförmiges Werkstück, das vorzugsweise zumindest abschnittsweise aus Holz, Holzwerkstoffen, Kunststoff, Aluminium oder dergleichen besteht, durch Unterdruck gehalten werden kann. Zudem weist der Robotergreifer in einem Randabschnitt eine im Wesentlichen gerade Anpresskannte auf. ein erfindungsgemäßer Robotergreifer weist ferner einen Aktor auf, der dazu ausgebildet ist, die Saugeinheit gegenüber der Aufnahme um eine erste Kippachse zu verkippen.

Bei dem erfindungsgemäßen Robotergreifer ist der Aktor mit einem Federelement in eine erste Nulllage vorgespannt, und der Aktor ist dazu ausgebildet, bei Druckbeaufschlagung einen der Vorspannung entgegengesetzten, diskreten Hub auszuführen. Auf diese Weise können ein einfacher Aufbau und eine einfache Ansteuerung des Robotergreifers ermöglicht werden. Konkret ist bei diesem Robotergreifer keine zweite Druckbeaufschlagung notwendig, um den Aktor von einem Hubzustand in seine Nulllage zu versetzen. Vielmehr reicht es, die Druckbeaufschlagung, mit der der Aktor einen der Vorspannung entgegengesetzten Hub ausführt, wegzunehmen. Das oben genannte Federelement kann beispielsweise eine Torsionsfeder, eine Spiralfeder, eine Biegefeder oder eine Gasdruckfeder sein.

Ein Industrieroboter ist im vorliegenden Kontext eine Einrichtung, die geeignet ist, ein Werkstück aufzunehmen, dessen Position zu verändern, und das Werkstück abzulegen. Ein Industrieroboter kann beispielsweise ein Sechsachsroboter, ein Linearroboter, ein Portalroboter, ein Roboter mit Parallelkinematik, oder eine vergleichbare Einrichtung sein.

Eine Saugeinheit kann beispielsweise als Saugkasten oder als Mehrzahl von Saugnäpfen ausgebildet sein. Ein Saugkasten kann beispielsweise im Wesentlichen quaderförmig ausgebildet sein. Eine Saugfläche kann beispielsweise eine Fläche eines Saugkastens sein, die Öffnungen aufweist. Jedoch kann eine Saugfläche auch eine virtuelle Fläche sein, die durch eine Mehrzahl an Saugnäpfen definiert wird.

Ein Aktor kann beispielsweise ein Linearmotor, ein Spindeltrieb, ein hydraulisch oder pneumatisch betätigbarer Zylinder, oder ein magnetisch betätigbarer Aktor sein;

Ein erfindungsgemäßer Robotergreifer ermöglicht es in vorteilhafter Art und Weise, ein Verfahren anzuwenden, bei dem auch mittig angeordnete Platten eines chaotischen Stapels vom chaotischen Stapel entnommen werden können, ohne dass zuvor Platten, die an Randabschnitten des chaotischen Stapels angeordnet sind, entnommen werden müssen. Hierzu kann der erfindungsgemäße Greifer zunächst von einem Industrieroboter in die Nähe eines zu entnehmenden Werkstücks auf einem chaotischen Stapel bewegt werden. Das zu entnehmende Werkstück kann beispielsweise ein plattenförmiges Werkstück sein, das in der obersten Stapellage eines chaotischen Stapels in einem mittigen Abschnitt des chaotischen Stapels liegt. Die Saugeinheit kann dann verkippt werden, sodass die Saugfläche gegenüber dem zu entnehmenden Werkstück einen Winkel, beispielsweise einen Winkel zwischen jeweils einschließlich 1° und 2° einnimmt. Der Robotergreifer kann ferner derart verfahren werden, dass die Anpresskante des Robotergreifers im Wesentlichen auf einer Kante des zu entnehmenden Werkstücks liegt. Die Saugeinheit und das zu entnehmende Werkstück können in diesem Zustand eine im Wesentlichen Keilförmige Lücke einschließen. Wenn die Saugeinheit nun in diesem Zustand mit Unterdruck beaufschlagt wird, kann das unter dem Robotergreifer liegende Werkstück an die Saugfläche der Saugeinheit herangezogen werden, ohne dass ein weiteres darunterliegendes Werkstück an dem herangezogenen Werkstück haftet. Während des Heranziehens beschreibt das Werkstück im Wesentlichen eine Kippbewegung in Richtung der Saugfläche. Die Anpresskante des Robotergreifers kann bezüglich der Kippbewegung des Werkstücks als Kippachse angesehen werden.

Ein erfindungsgemäßer Robotergreifer kann eine Mehrzahl an Saugeinheiten, beispielsweise zwei Saugeinheiten aufweisen. Eine erste Saugeinheit kann Bezüglich einer ersten Richtung länger sein als eine zweite Saugeinheit. Die Saugfläche der ersten Saugeinheit und die Saugfläche der zweiten Saugeinheit liegen bevorzugt in derselben Ebene. Die erste und die zweite Saugeinheit sind bevorzugt bezüglich der ersten Richtung nebeneinander angeordnet.

Wenn ein Robotergreifer wie oben beschrieben eine erste und eine zweite Saugeinheit aufweist, kann die Mehrzahl an Saugeinheiten eine Saugeinheitengruppe festlegen. Ein erfindungsgemäßer Robotergreifer kann eine Mehrzahl, bevorzugt jedoch zwei dieser Saugeinheitengruppen aufweisen. Bevorzugt liegen die Saugflächen der Saugeinheiten der Mehrzahl von Saugeinheitengruppen in derselben Ebene. Bevorzugt sind die Saugeinheitengruppen bezüglich einer zweiten Richtung, die von der ersten Richtung verschieden ist, nebeneinander angeordnet sind. Die zweite Richtung kann senkrecht auf der ersten Richtung stehen.

Wenn ein Robotergreifer eine Mehrzahl an Saugeinheiten aufweist, ist der Robotergreifer vorzugsweise derart ausgebildet, dass einzelne Saugeinheiten oder jede einzelne Saugeinheit selektiv mit Unterdruck versorgt werden kann.

Eine Mehrzahl von Saugeinheiten kann mit einer erhöhten Flexibilität des Robotergreifers assoziiert werden.

Insbesondere, wenn die Saugeinheiten selektiv mit Unterdruck versorgt werden können, eignet sich ein derartiger Robotergreifer zur Entnahme von Platten verschiedener Abmessungen. So kann beispielsweise nur eine der Saugeinheiten des Robotergreifers, nämlich eine Saugeinheit mit einer kleinen Saugfläche, mit Unterdruck versorgt werden, um ein kleines Werkstück von einem Stapel zu entnehmen. Es kann jedoch auch eine andere Saugeinheit des Robotergreifers, nämlich eine Saugeinheit mit einer größeren Saugfläche, mit Unterdruck versorgt werden, um ein größeres Werkstück von einem Stapel zu entnehmen. Darüber hinaus können auch mehrere Saugeinheiten eines Robotergreifers gleichzeitig mit Unterdruck versorgt werden, um ein sehr großes Werkstück von einem Stapel zu entnehmen.

Ein erfindungsgemäßer Robotergreifer kann dazu ausgebildet sein, die Saugeinheit gegenüber der Aufnahme um einen Winkel zwischen jeweils einschließlich 0,1° und 35° zu verkippen. Bevorzugt ist ein erfindungsgemäßer Robotergreifer dazu ausgebildet, die Saugeinheit gegenüber der Aufnahme um einen Winkel zwischen jeweils einschließlich 0,5° und 10° zu verkippen. Besonders bevorzugt ist ein erfindungsgemäßer Robotergreifer dazu ausgebildet, die Saugeinheit gegenüber der Aufnahme um einen Winkel zwischen jeweils einschließlich 1° und 2° zu verkippen.

Es hat sich gezeigt, dass sich die genannten Intervalle besonders eignen, um ein plattenförmiges Werkstück prozesssicher aufzunehmen und gleichzeitig zu verhindern, dass ein darunterliegendes Werkstück am zu entnehmenden Werkstück haftet.

Bei einem erfindungsgemäßen Robotergreifer kann die Anpresskante eine Kante sein, die im Wesentlichen parallel zur ersten Kippachse verläuft. Beispielsweise kann die Anpresskante eine Kante sein, die zwischen der Saugfläche und einer seitlichen Fläche der Saugeinheit ausgebildet ist, und die im Wesentlichen parallel zur ersten Kippachse verläuft. Bevorzugt ist die Anpresskante mit einem Radius kleiner oder gleich 10 mm, und besonders bevorzugt mit einem Radius kleiner oder gleich 1 mm versehen. Beispielsweise liegt der Radius in einem Bereich zwischen jeweils einschließlich 0,2 mm und 1 mm.

Wenn eine Anpresskante mit einem Radius versehen ist, kann sich diese vorteilhaft auf mögliche Wechselwirkungen mit dem zu entnehmenden Werkstück auswirken. Konkret fördert ein Radius eine beschädigungsfreie Entnahme des Werkstücks.

Die Anpresskante kann jedoch auch ein Element sein, das nicht direkt mit der Saugfläche einer Saugeinheit in Verbindung steht. So kann eine Anpresskante beispielsweise ein Element sein, das an der Aufnahme des Robotergreifers oder an einem anderen strukturellen Element desselben befestigt ist. Ein Robotergreifer kann zudem mehrere Anpresskanten aufweisen.

Ein erfindungsgemäßer Robotergreifer kann ferner ein Identifikationssystem aufweisen, das dazu ausgebildet ist, Daten aus einem Identifikationsmittel eines Werkstücks zu lesen. Ein Identifikationsmittel kann beispielweise ein Barcode, ein QR-Code, ein RFID-Tag oder ein vergleichbares Identifikationsmittel sein. Auf diese Weise kann es einem Produktionsleitsystem, beispielsweise einem MES-System, ermöglicht werden, anstehende Fertigungsschritte zu planen, und/oder den Fertigungsprozess zu überwachen.

Ein erfindungsgemäßer Robotergreifer kann ein Erkennungssystem aufweisen, das dazu ausgebildet ist, die Größe und/oder Position von Werkstücken und/oder Werkstückkanten zu erkennen. Beispielsweise kann der Robotergreifer dazu ausgebildet sein, die Größe und/oder Position von Werkstücken und/oder Werkstückkanten mithilfe eines optischen Bilderkennungssystems zu erkennen. Alternativ oder zusätzlich kann der Robotergreifer dazu ausgebildet sein, die Größe und/oder Position von Werkstücken und/oder Werkstückkanten mithilfe des Identifikationsmittels und/oder mithilfe von Daten zu ermitteln, die von einer zentralen Einrichtung zur Verfügung gestellt werden.

Mit einem derartigen Erkennungssystem kann die Lage von Werkstückkanten mit einer relativ hohen Genauigkeit erfasst werden, wodurch der die Anpresskante des Robotergreifers relativ genau auf einer Werkstückkante platziert werden kann. Eine relativ genaue Platzierung der Anpresskante des Robotergreifers auf einer Werkstückkante fördert wiederum eine prozesssichere Entnahme des zu entnehmenden Werkstücks aus dem Stapel.

Ein erfindungsgemäßer Robotergreifer kann dazu ausgebildet sein, zu erkennen, ob die Anpresskante mit einem Gegenstand in Kontakt steht. Bevorzugt ist der Robotergreifer zudem dazu ausgebildet, Informationen über die aus dem Kontakt resultierende Anpresskraft zu erlangen. Auf diese Weise kann zum einen ein gewisser, für die Entnahme des Werkstücks notwendiger Druck an der Werkstückkante erzeugt werden. Zum anderen kann das Werkstück dadurch vor Beschädigungen, beispielsweise durch eine erhöhte Anpresskraft, geschützt werden.

Der vorstehend beschriebene Robotergreifer kann zumindest zwei seriell verbundene Aktoren aufweisen, wobei jeder der zumindest zwei seriell verbundenen Aktoren dazu ausgebildet ist, bei Druckbeaufschlagung einen der Vorspannung entgegengesetzten, diskreten Hub auszuführen, und wobei der Robotergreifer derart ausgebildet ist, dass jeder der zumindest zwei seriell verbundenen Aktoren selektiv mit Druck beaufschlagt werden kann. Auf diese Weise kann ein kostengünstiger Robotergreifer bereitgestellt werden, bei dem die Saugfläche der Saugeinheit verschiedene Kippwinkel einnehmen kann. Der Robotergreifer kann folglich flexibel für verschiedene Werkstücktypen und Werkstückgrößen eingesetzt werden.

Einer der zuvor beschriebenen Robotergreifer kann ferner zumindest zwei parallel angeordnete Aktoren aufweist, wobei jeder dieser zumindest zwei Aktoren dazu ausgebildet ist, bei Druckbeaufschlagung einen der Vorspannung entgegengesetzten, diskreten Hub auszuführen, und wobei der Robotergreifer derart ausgebildet ist, dass jeder der zumindest zwei parallel verbundenen Aktoren selektiv mit Druck beaufschlagt werden kann. Auf diese Weise kann es ermöglicht werden, dass die Saugfläche der Saugeinheit in eine erste Richtung und/oder in eine zweite Richtung verkippt wird. Die erste Richtung und die zweite Richtung können entgegengesetzte Richtungen sein. Folglich kann die Flexibilität des Robotergreifers weiter erhöht werden.

Ein erfindungsgemäßer Robotergreifer kann ferner derart ausgebildet sein, dass die mindestens eine Saugeinheit um eine zweite Achse verkippbar ist, wobei die Saugeinheit in Bezug auf die zweite Achse in eine zweite Nulllage vorgespannt ist, wobei die zweite Achse von der ersten Achse verschieden ist. Bevorzugt steht die zweite Achse senkrecht auf der ersten Achse. Zudem ist die zweite Achse bevorzugt parallel zur ersten Richtung. Mit einem derartigen Robotergreifer kann es ermöglicht werden, ein Werkstück von einem Stapel zu entnehmen, das gegenüber der horizontalen Ebene schief auf dem Stapel liegt. Die horizontale Ebene ist eine Ebene, bezüglich welcher die Gravitationsrichtung senkrecht verläuft. Zudem können mit einem derartigen Robotergreifer Werkstücke von einem Stapel entnommen werden, die keine konstante Dicke aufweisen.

Ein erfindungsgemäßer Industrieroboter ist als Linearroboter mit zumindest zwei, bevorzugt jedoch drei rein translatorischen Freiheitsgraden und mit nicht mehr als zwei rotatorischen Freiheitsgraden ausgebildet. Der erfindungsgemäße Industrieroboter ist mit einem der zuvor beschriebenen Robotergreifer versehen.

Ein Vorteil der Erfindung liegt im Zusammenwirken des erfindungsgemäßen Industrieroboters mit dem Robotergreifer. Dadurch nämlich, dass der Aktor zum Verkippen der Saugfläche im Robotergreifer integriert ist, kann anstatt eines kostenintensiven Sechsachsroboters ein kostengünstiger Linearroboter eingesetzt werden.

Ein erfindungsgemäßes Verfahren zur Entnahme plattenförmiger Werkstücke, die bevorzugt zumindest abschnittsweise aus Holz, Holzwerkstoffen, Kunststoff, Aluminium oder dergleichen bestehen, von einem Stapel, weist die Schritte auf:
- Verfahren eines zuvor beschriebenen Robotergreifers in die Nähe eines zu entnehmenden Werkstücks, wobei das zu entnehmende Werkstück vorzugsweise zwischen anderen Werkstücken liegt;
- Verkippen der Saugeinheit, sodass die Saugfläche gegenüber dem zu entnehmenden Werkstück einen Winkel zwischen jeweils einschließlich 0,1° und 35°, bevorzugt zwischen jeweils einschließlich 0,5° und 10° und besonders bevorzugt zwischen jeweils einschließlich 1° und 2° einnimmt;
- Verfahren des Robotergreifers, sodass die Anpresskante des Robotergreifers im Wesentlichen auf einer Kante des zu entnehmenden Werkstücks liegt;
- Beaufschlagen der Saugeinheit mit Unterdruck, sodass das zu entnehmende Werkstück an die Saugfläche der Saugeinheit herangezogen wird;
- Anheben des Robotergreifers zusammen mit dem an der Saugfläche gehaltenen zu entnehmenden Werkstück.

Ein erfindungsgemäßes Verfahren kann zudem den Schritt des Zurückkippens der Saugeinheit, zusammen mit dem zu entnehmenden Werkstück, aufweisen.

Bevorzugt wird das erfindungsgemäße Verfahren mit dem erfindungsgemäßen Industrieroboter durchgeführt.

Dem erfindungsgemäßen Verfahren können dieselben und/oder vergleichbare Vorteile zugeordnet werden, wie dem zuvor beschriebenen Robotergreifer bzw. Industrieroboter.

Bevorzugt wird der Verfahrensschritt des Beaufschlagens der Saugeinheit mit Unterdruck nach dem Schritt des Verkippens der Saugeinheit durchgeführt. Auf diese Weise wird die Gefahr minimiert, weitere, unter dem zu entnehmenden Werkstück angeordnete Werkstücke mit anzusaugen.

Ein erfindungsgemäßes Verfahren kann ferner den folgenden Schritt aufweisen: Erfassen der Größe des Werkstücks mit einem Erkennungssystem, das dazu ausgebildet ist, die Lage der Kanten des Werkstücks zu erfassen, und/oder mit einem Identifikationssystem, das dazu ausgebildet ist, die Größe des Werkstücks aus einem dem Werkstück zugeordneten Identifikationsmittel zu lesen, wobei das Identifikationsmittel bevorzugt ein Barcode, ein QR-Code, oder ein vergleichbarer Code ist.

Mit einem derartigen Erkennungssystem kann die Lage von Werkstückkanten mit einer relativ hohen Genauigkeit erfasst werden, wodurch der die Anpresskante des Robotergreifers relativ genau auf einer Werkstückkante platziert werden kann. Eine relativ genaue Platzierung der Anpresskante des Robotergreifers auf einer Werkstückkante fördert wiederum eine prozesssichere Entnahme des zu entnehmenden Werkstücks aus dem Stapel.

Ein erfindungsgemäßes Verfahren kann zudem den folgenden Schritt aufweisen: Bestimmen der Position der Kante eines Werkstücks auf der Grundlage der Position eines dem Werkstück zugeordneten Identifikationsmittels, wobei das Identifikationsmittel bevorzugt ein Barcode, ein QR-Code, oder ein vergleichbarer Code ist.

Das zuvor beschriebene Verfahren kann gegenüber anderen, vergleichbaren Verfahren Kostenvorteile aufweisen. So sind etwa Konfigurationen denkbar, bei denen ein System zur Bestimmung der Position eines Identifikationsmittels kostengünstiger ist, als ein direktes System zur Bestimmung der Position einer Kante eines Werkstücks. Zudem kann ein zuvor beschriebenes Verfahren genauer sein, als ein direktes System zur Bestimmung der Position einer Kante eines Werkstücks. Der Grund liegt darin, dass ein Identifikationsmittel mit reproduzierbaren Landmarken versehen sein kann, wohingegen Kanten eines Werkstücks je nach Werkstoffbeschaffenheit ein unterschiedliches Erscheinungsbild aufweisen können.

Ein erfindungsgemäßes Verfahren kann ferner die folgenden Schritte aufweisen:
- Auswahl einer für die Größe des zu entnehmenden Werkstücks geeigneten Saugeinheit; oder Auswahl einer Kombination mehrerer für die Größe des zu entnehmenden Werkstücks geeigneter Saugeinheiten;
- selektive Versorgung der ausgewählten Saugeinheit oder der ausgewählten Saugeinheiten mit Unterdruck, wobei die nicht ausgewählten Saugeinheiten nicht mit Unterdruck versorgt werden.

Durch diese zusätzlichen Verfahrensschritte kann die Flexibilität des erfindungsgemäßen Verfahrens gefördert werden. Konkret können dadurch auch Platten verschiedener Abmessungen effizient entnommen werden. Beispielsweise kann nur eine der Saugeinheiten des Robotergreifers, nämlich eine Saugeinheit mit einer kleinen Saugfläche mit Unterdruck versorgt werden, um ein kleines Werkstück von einem Stapel zu entnehmen. Es kann jedoch auch eine andere Saugeinheit des Robotergreifers, nämlich eine Saugeinheit mit einer größeren Saugfläche mit Unterdruck versorgt werden, um ein größeres Werkstück von einem Stapel zu entnehmen. Darüber hinaus können auch mehrere Saugeinheiten eines Robotergreifers gleichzeitig mit Unterdruck versorgt werden, um ein sehr großes Werkstück von einem Stapel zu entnehmen.

Ein erfindungsgemäßes Handhabungssystem weist einen erfindungsgemäßen Industrieroboter und ein Messmittel auf. Das Handhabungssystem ist dazu ausgebildet, zu erkennen, ob mehrere Werkstücke an einer Saugeinheit des Robotergreifers gehalten werden. Das Messmittel ist bevorzugt ein Flächenscanner. Die mehreren Werkstücke können beispielsweise zwei plattenförmige Werkstücke sein, die in Dickenrichtung der Werkstücke aufgrund von Adhäsionseffekten und/oder wegen der Saugwirkung des Robotergreifers aneinanderhaften.

Wenn an der Unterseite eines zu entnehmenden Werkstücks ein weiteres Werkstück haftet, besteht die Gefahr, dass dieses Werkstück während der Handhabung unkontrolliert hinabfällt. Dadurch kann beispielsweise die weitere Entnahmeroutine gestört werden. Ferner besteht auch die Gefahr, dass durch das hinabfallen Personen verletzt, oder Anlagenkomponenten beschädigt werden. Wenn hingegen erkannt wird, ob mehrere Werkstücke an einer Saugeinheit gehalten werden, kann der konkrete Entnahmevorgang beispielsweise angehalten und/oder Rückabgewickelt werden. Alternativ oder zusätzlich kann ein Maschinenbediener gerufen werden, der den Fehler behebt. Somit kann das erfindungsgemäße Handhabungssystem mit dem Effekt assoziiert werden, die Effizienz des Entnahmevorgangs zu verbessern, die Verletzungsgefahr für Personen zu reduzieren, und/oder Anlagenkomponenten vor Beschädigung zu schützen.

### Kurze Beschreibung der Figuren

- Fig. 1: zeigt eine perspektivische Ansicht einer Lagereinrichtung mit einem chaotischen Stapel;
- Fig. 2: ist eine schematische Darstellung einer ersten Ausführungsform eines erfindungsgemäßen Robotergreifers;
- Fig. 3a: ist eine schematische Darstellung einer zweiten Ausführungsform eines erfindungsgemäßen Robotergreifers in einem ersten Zustand;
- Fig. 4a: ist eine schematische Draufsicht einer dritten Ausführungsform eines erfindungsgemäßen Robotergreifers;
- Fig. 4b: ist eine schematische Schnittansicht der dritten Ausführungsform eines erfindungsgemäßen Robotergreifers entlang der Linie A-A in Fig. 4a;
- Fig. 5a: zeigt schematisch einen Schritt einer Ausführungsform eines erfindungsgemäßen Verfahrens zur Entnahme plattenförmiger Werkstücke von einem Stapel;
- Fig. 5b: zeigt schematisch einen weiteren Schritt einer Ausführungsform eines erfindungsgemäßen Verfahrens zur Entnahme plattenförmiger Werkstücke von einem Stapel;
- Fig. 5c: zeigt schematisch einen weiteren Schritt einer Ausführungsform eines erfindungsgemäßen Verfahrens zur Entnahme plattenförmiger Werkstücke von einem Stapel
- Fig. 5d: zeigt schematisch einen weiteren Schritt einer Ausführungsform eines erfindungsgemäßen Verfahrens zur Entnahme plattenförmiger Werkstücke von einem Stapel;

### Ausführliche Beschreibung bevorzugter Ausführungsformen

Die nachfolgend beschriebenen bevorzugten Ausführungsformen der vorliegenden Erfindung stellen lediglich Beispiele dar, und sind nicht als beschränkend anzusehen. Gleiche Bezugszeichen, die in verschiedenen Figuren aufgeführt sind, benennen identische, einander entsprechende, oder funktionell ähnliche Elemente.

In Fig. 1 ist ein chaotischer Stapel 210 dargestellt, der auf einer Lagereinrichtung 200 liegt. Der chaotische Stapel 210 weist einzelne Lagen mit Werkstücken 220 auf, wobei sich die einzelnen Lagen hinsichtlich ihrer Zusammensetzung und/oder Anordnung unterscheiden. Im dargestellten Fall besteht der chaotische Stapel 210 ausschließlich aus plattenförmigen Werkstücken 220. Jedoch ist es auch denkbar, dass der chaotische Stapel alternativ oder zusätzlich abweichende Werkstücktypen, beispielsweise stangenförmige Werkstücke aufweist. Der chaotische Stapel 210 kann auch Werkstücke mit nichtkonstanter Dicke, beispielsweise keilförmige Werkstücke und/oder Werkstücke mit einer beliebigen Form aufweisen. Die Lagereinrichtung 200 kann beispielsweise eine Palette, oder ein Teileträger für ein fahrerloses Transportsystem (FTS) sein. Der in Fig. 1 dargestellte chaotische Stapel 210 weist Werkstücke 220b auf, die in einem Randabschnitt des chaotischen Stapels 210 liegen. Zudem weist der in Fig. 1 dargestellte chaotischer Stapel 210 Werkstücke 220a auf, die in einem mittigen Abschnitt des chaotischen Stapels 210 liegen. Die Werkstücke 220 des in Fig. 1 dargestellten chaotischen Stapels 210 weisen verschiedene Maße auf.

In Fig. 2 ist schematisch eine erste Ausführungsform eines erfindungsgemäßen Robotergreifers dargestellt. Der Robotergreifer 100 weist eine Aufnahme 10 auf, die dazu ausgebildet ist, mit einem Industrieroboter 300 verbunden zu werden. Zudem weist der Robotergreifer 100 mindestens eine Saugeinheit 20 auf, die dazu ausgebildet ist, mit einer Vakuumquelle verbunden zu werden. Die Saugeinheit 20 weist eine Saugfläche 21 auf, an der ein bevorzugt plattenförmiges Werkstück, das vorzugsweise zumindest abschnittsweise aus Holz, Holzwerkstoffen, Kunststoff, Aluminium oder dergleichen besteht, durch Unterdruck gehalten werden kann. Zudem weist der Robotergreifer 100 in einem Randabschnitt eine im Wesentlichen gerade Anpresskante 140 auf. Der Robotergreifer 100 weist ferner einen Aktor 30 auf, der dazu ausgebildet ist, die Saugeinheit 20 gegenüber der Aufnahme 10 um eine erste Kippachse zu verkippen.

In der dargestellten ersten Ausführungsform ist die Kippachse die Achse eines Gelenks 90. Die Kippachse verläuft parallel zur X-Richtung. Der Aktor 30 ist ein Zylinder, beispielsweise ein hydraulisch oder pneumatisch betätigbarer Zylinder. Der Aktor 30 ist über ein Gelenk 110 mit einem ersten Trägerelement 40, und ein weiteres Gelenk 110 mit einem zweiten Trägerelement 41 verbunden. Das erste Trägerelement 40 ist ohne Freiheitsgrad mit der Aufnahme 10 verbunden. Das zweite Trägerelement 41 ist über ein Gelenk 90 mit der Aufnahme 10 verbunden. An dem zweiten Trägerelement 41 ist die Saugeinheit 20 befestigt. Die Saugeinheit 20 ist im vorliegenden Fall als Saugkasten 20 ausgebildet, der an seiner Unterseite Saugöffnungen 50 aufweist. Die Saugöffnungen 50 stehen in strömungstechnischer Verbindung mit einem Raum im Inneren des Saugkastens 20. Der Raum im Inneren des Saugkastens wiederum kann mit einer Vakuumquelle (nicht dargestellt) strömungstechnisch in Verbindung gebracht werden.

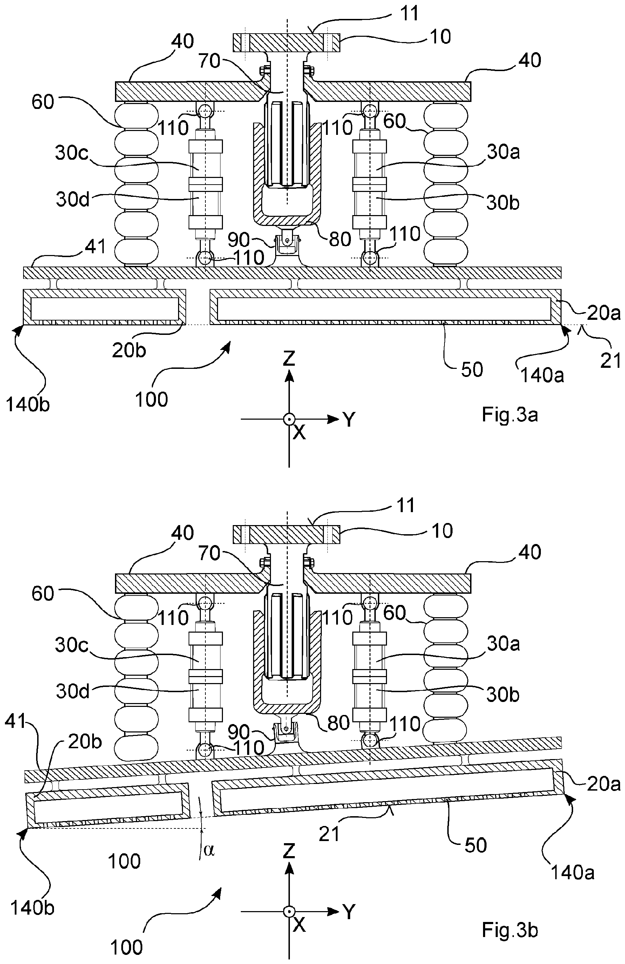

Die Figs. 3a und 3b zeigen eine schematische Darstellung einer zweiten Ausführungsform eines erfindungsgemäßen Robotergreifers 100. Der Robotergreifer 100 der zweiten Ausführungsform weist eine Aufnahme 10 auf, die dazu ausgebildet ist, mit einem Industrieroboter 300 verbunden zu werden. Zudem weist der Robotergreifer 100 zumindest zwei Saugeinheiten 20a,20b auf, die jeweils dazu ausgebildet sind, mit einer Vakuumquelle verbunden zu werden. Die Saugeinheiten 20a,20b weisen eine Saugfläche 21 auf, an der ein bevorzugt plattenförmiges Werkstück 220, das vorzugsweise zumindest abschnittsweise aus Holz, Holzwerkstoffen, Kunststoff, Aluminium oder dergleichen besteht, durch Unterdruck gehalten werden kann. Der Robotergreifer 100 der zweiten Ausführungsform weist in einem ersten Randabschnitt eine im Wesentlichen gerade Anpresskannte 140a, und in einem zweiten Randabschnitt eine im Wesentlichen gerade Anpresskante 140b auf. Der Robotergreifer 100 der zweiten Ausführungsform weist ferner zumindest vier Aktoren 30a,30b,30c,30d auf, die dazu ausgebildet sind, die Saugeinheiten 20a,20b gegenüber der Aufnahme 10 um eine erste Kippachse zu verkippen.

Im dargestellten Fall ist die erste Kippachse eine Achse, die parallel zur X-Richtung ist. Die erste Kippachse kann beispielsweise eine Achse des Gelenks 90, eine Achse eines Gelenks 110 eines Aktors 30a,30b,30c,30d, oder eine Achse sein, die im Wesentlichen deckungsgleich mit einer der Anpresskanten 140a,140b ist. Bei dem Robotergreifer 100 der zweiten Ausführungsform sind die Aktoren mit Federelementen 60 in eine erste Nulllage vorgespannt. Der Robotergreifer 100 der zweiten Ausführungsform weist zumindest vier Aktoren 30a,30b,30c,30d auf, von denen jeweils zwei Aktoren 30a,30b und 30c,30d seriell verbunden sind. Jeder der seriell verbundenen Aktoren 30a,30b,30c,30d ist dazu ausgebildet, bei Druckbeaufschlagung einen der Vorspannung entgegengesetzten, diskreten Hub auszuführen. Der Robotergreifer 100 der zweiten Ausführungsform ist derart ausgebildet, dass jeder der Aktoren 30a,30b,30c,30d selektiv mit Druck beaufschlagt werden kann. Die seriell angeordneten Aktoren 30a,30b sind parallel zu den seriell angeordneten Aktoren 30c,30d angeordnet. Auf diese Weise kann der Robotergreifer 100 in zwei einander entgegensetzte Richtungen verkippt werden. Durch die serielle Anordnung der Aktoren 30a,30b bzw. 30c,30d ist es möglich, dass die Saugeinheiten 20a,20b, bzw. die Saugfläche 21 des Robotergreifers 100 gegenüber der Aufnahme 10 zumindest vier verschiedene Kippwinkel einnimmt. Der Robotergreifer der zweiten Ausführungsform kann Federelemente 60 aufweisen, die beispielsweise als Gasdruckfedern, als Torsionsfedern, als Biegefedern, oder ähnlich ausgebildet sind. Die in den Figs. 3a und 3b dargestellte Variante der zweiten Ausführungsform weist Gasdruckfedern 60 auf.

Wie in den Figs. 3a und 3b dargestellt, kann eine Saugeinheit 20a des Robotergreifers 100 in einer ersten Richtung, im vorliegenden Fall in der Y-Richtung, länger sein, als eine andere Saugeinheit 20b des Robotergreifers 100. Die Saugeinheiten 20a,20b des Robotergreifers weisen eine gemeinsame, ebene Saugfläche 21 auf. Zudem sind die Saugeinheiten bezüglich der ersten Richtung, im vorliegenden Fall bezüglich der Y-Richtung, nebeneinander angeordnet. Die Saugeinheiten 20a,20b sind im vorliegenden Fall als Saugkästen 20a,20b ausgebildet, die an ihrer Unterseite Saugöffnungen 50 aufweisen. Die Saugöffnungen 50 stehen jeweils in strömungstechnischer Verbindung mit Räumen im Inneren der Saugkästen 20a,20b. Die Räume im Inneren der Saugkästen 20a,20b wiederum können mit einer Vakuumquelle (nicht dargestellt) strömungstechnisch in Verbindung gebracht werden. Jeder Raum im Inneren eines Saugkastens 20a,20b kann selektiv mit einer Vakuumquelle (nicht dargestellt) strömungstechnisch in Verbindung gebracht werden.

Die Aktoren 30a,30c sind mit jeweils einem Gelenk 110 an einem ersten Trägerelement 40 befestigt. Die Aktoren 30b,30d sind mit jeweils einem Gelenk 110 an einem zweiten Trägerelement 41 befestigt. An dem zweiten Trägerelement 41 sind die Saugeinheiten 20a,20b befestigt. Das erste Trägerelement 40 ist ohne Freiheitsgrad mit der Aufnahme 10 verbunden. Das zweite Trägerelement 41 ist über das Gelenk 90 mit einer Keilwellennabe 80 verbunden. Die Keilwellennabe 80 steht mit einer Keilwelle 70 im Eingriff, die wiederum ohne Freiheitsgrad mit der Aufnahme 10 verbunden ist. Die Aufnahme 10 weist eine Aufnahmefläche 11 auf.

Die dargestellte Ausführungsform mit einer Keilwelle 70 und einer Keilwellennabe 80 ist insofern vorteilhaft, als dass Saugeinheiten 20a,20b mit wenigen Aktoren 30a,30b,30c,30d in eine Vielzahl verschiedener Kippwinkel gebracht werden können. Zudem sichert das System, bestehend aus Keilwelle 70 und Keilwellennabe 80, die Saugeinheiten 20a,20b gegen Querkräfte (im dargestellten Fall: Kräfte in X-Richtung und in Y-Richtung) und gegen Torsion bezüglich der Keilwellenachse (im dargestellten Fall: Torsion bezüglich der Z-Achse).

Die in den Figs. 3a und 3b dargestellten Zustände des Robotergreifers 100 der zweiten Ausführungsform unterscheiden sich allein durch den Kippwinkel α, um den die Saugeinheiten 20a,20b, bzw. deren Saugfläche 21 bezüglich der Aufnahme 10, die eine Aufnahmefläche 11 aufweist, verkippt ist. Konkret zeigt Fig. 3a einen Zustand, bei dem die Saugfläche 21 des Robotergreifers 100 im Wesentlichen parallel zur Aufnahmefläche 11 der Aufnahme 10 orientiert ist. Fig. 3b hingegen zeigt einen Zustand, bei dem die Saugfläche 21 des Robotergreifers 100 gegenüber der Aufnahmefläche 11 der Aufnahme 10 einen Winkel α einnimmt. Der Winkel α kann beispielsweise einen Wert zwischen jeweils einschließlich 0,1° und 35° einnehmen. Bevorzugt nimmt der Winkel α einen Wert zwischen jeweils einschließlich 0,5° und 10° und besonders bevorzugt zwischen jeweils einschließlich 1° und 2° ein.

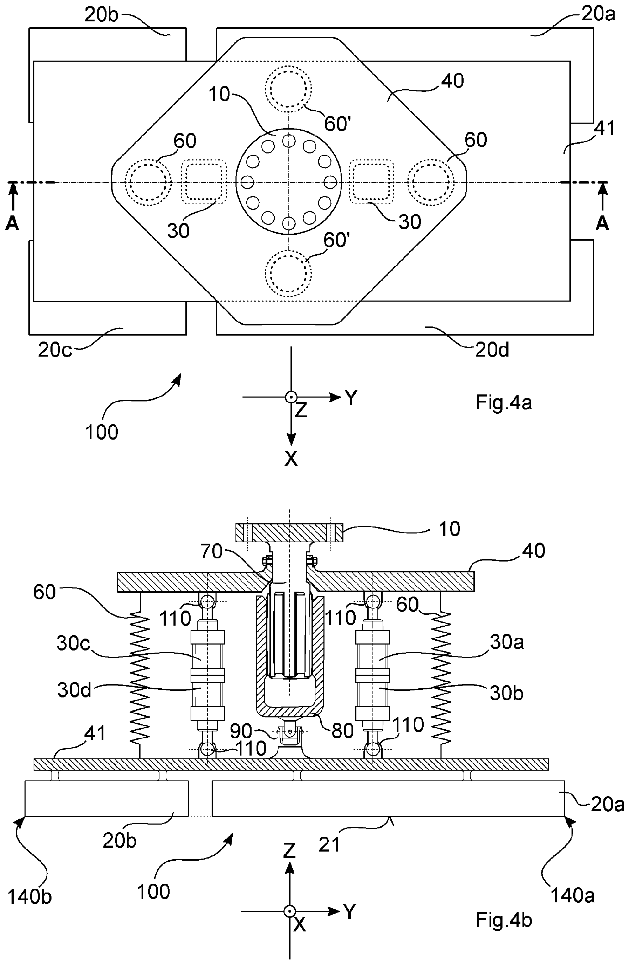

In Fig. 4a ist eine schematische Draufsicht einer dritten Ausführungsform eines erfindungsgemäßen Robotergreifers 100 dargestellt. Fig. 4b zeigt eine schematische Schnittansicht der dritten Ausführungsform entlang der Linie A-A in Fig. 4a. Die dritte Ausführungsform des Robotergreifers 100 entspricht im Wesentlichen der zuvor beschriebenen zweiten Ausführungsform. Jedoch weist die dritte Ausführungsform des Robotergreifers 100 eine Mehrzahl, bevorzugt jedoch zwei Gruppen von Saugeinheiten auf. Die Saugeinheiten 20a,20b bilden im dargestellten Fall eine erste Saugeinheitengruppe. Die Saugeinheiten 20c,20d bilden eine zweite Saugeinheitengruppe (vgl. Fig. 4a). Die Saugflächen 21 der Saugeinheiten der Saugeinheitengruppen liegen in derselben Ebene. Die Saugeinheitengruppen sind bezüglich einer zweiten Richtung, die von der ersten Richtung verschieden ist, nebeneinander angeordnet sind. Im dargestellten Fall ist die zweite Richtung die X-Richtung.

Der Robotergreifer 100 der zweiten Ausführungsform ist derart ausgebildet, dass einzelne Saugeinheiten 20a,20b,20c,20d, selektiv mit Unterdruck versorgt werden können. Der Robotergreifer 100 der dritten Ausführungsform ist auch derart ausgebildet, dass einzelne Kombinationen aus Saugeinheiten, beispielsweise die Saugeinheiten 20b und 20c, mit Unterdruck versorgt werden können.

Der Robotergreifer 100 der dritten Ausführungsform eignet sich zur Entnahme von Platten 220 verschiedener Abmessungen von einem chaotischen Stapel 210. So kann beispielsweise nur eine der Saugeinheiten 20a,20b,20c,20d des Robotergreifers 100, beispielsweise die Saugeinheit 20b, mit Unterdruck versorgt werden, um ein kleines Werkstück von einem Stapel zu entnehmen. Es kann jedoch auch eine andere der Saugeinheiten 20a,20b,20c,20d des Robotergreifers 100, beispielsweise die Saugeinheit 20a, mit Unterdruck versorgt werden, um ein größeres Werkstück 220 von einem chaotischen Stapel 210 zu entnehmen. Darüber hinaus können auch mehrere oder alle der Saugeinheiten 20a,20b,20c,20d eines Robotergreifers 100 gleichzeitig mit Unterdruck versorgt werden, um ein sehr großes Werkstück 220 on einem chaotischen Stapel 210 zu entnehmen.

Der Robotergreifer 100 der dritten Ausführungsform ist derart ausgebildet, dass die Saugeinheiten 20a,20b,20c,20d um eine zweite Achse verkippbar sind. Die zweite Achse ist im dargestellten Fall die Y-Achse. Die Saugeinheiten 20a,20b,20c,20d sind in Bezug auf die zweite Achse in eine zweite Nulllage vorgespannt. Die Vorspannung erfolgt mit Federelementen 60' (vgl. Fig. 4a). Sowohl die Verkippung um die erste Achse, als auch die Verkippung um die zweite Achse können mit dem Gelenk 90 realisiert werden. Das Gelenk 90 kann zu diesem Zweck als Kardangelenk ausgebildet sein.

Somit können mit einem Robotergreifer 100 der dritten Ausführungsform Werkstücke 220 von einem chaotischen Stapel 210 entnommen werden, die gegenüber der horizontalen Ebene schief auf dem chaotischen Stapel 210 liegen. Die horizontale Ebene ist eine Ebene, bezüglich welcher die Gravitationsrichtung senkrecht verläuft. Im dargestellten Fall ist die horizontale Ebene die XY-Ebene. Zudem können mit einem Robotergreifer 100 der dritten Ausführungsform Werkstücke 220 von einem chaotischen Stapel 210 entnommen werden, die keine konstante Dicke aufweisen.

Zwar sind die Federelemente 60 des Robotergreifers 100 der dritten Ausführungsform in Fig. 4b schematisch als Spiralfedern dargestellt. Jedoch kann ein Robotergreifer 100 der dritten Ausführungsform alternativ oder zusätzlich auch sämtliche anderen Federtypen, beispielsweise Torsionsfedern, Biegefedern oder Gasdruckfedern aufweisen. Dasselbe gilt für die Federelemente 60`.

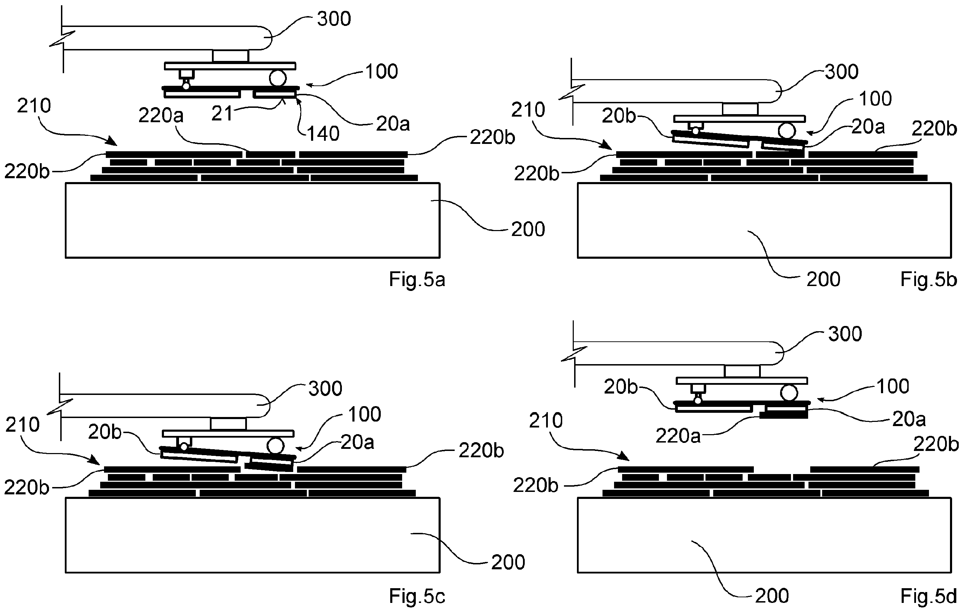

In den Figs. 5a bis 5d sind schematisch Schritte einer Ausführungsform eines erfindungsgemäßen Verfahrens zur Entnahme plattenförmiger Werkstücke 220 von einem chaotischen Stapel 210 dargestellt. Fig. 5a zeigt schematisch den Schritt des Verfahrens eines Robotergreifers 100, der an einem Industrieroboter 300 befestigt ist, in die Nähe eines zu entnehmenden Werkstücks 220a. Das zu entnehmende Werkstück 220a liegt im Wesentlichen mittig auf der obersten Lage eines chaotischen Stapels 210 zwischen Werkstücken 220b, die in Randbereichen der obersten Lage des chaotischen Stapels 210 liegen. Der dargestellte Robotergreifer 100 weist zumindest eine Saugeinheit 20a auf. Der dargestellte Robotergreifer 100 kann beispielsweise ein Robotergreifer 100 der ersten, zweiten oder dritten Ausführungsform sein. Die Werkstücke des chaotischen Stapels 210 liegen auf einer Lagereinrichtung 200.

Fig. 5b zeigt einen Zustand des am Industrieroboter 300 befestigten Robotergreifers 100, der Lagereinrichtung 200 und des chaotischen Stapels 210 nach der Durchführung der folgenden Verfahrensschritte: Verkippen der Saugeinheit 20a, sodass die Saugfläche 21 gegenüber dem zu entnehmenden Werkstück 220a einen Winkel zwischen jeweils einschließlich 0,1° und 35°, bevorzugt zwischen jeweils einschließlich 0,5° und 10° und besonders bevorzugt zwischen jeweils einschließlich 1° und 2° einnimmt; Verfahren des Robotergreifers 100, sodass die Anpresskante 140 des Robotergreifers im Wesentlichen auf einer Kante des zu entnehmenden Werkstücks 220a liegt.

Fig. 5c zeigt einen Zustand des am Industrieroboter 300 befestigten Robotergreifers 100, der Lagereinrichtung 200 und des chaotischen Stapels 210 nach der Durchführung des Verfahrensschritts: Beaufschlagen der Saugeinheit 20a mit Unterdruck, sodass das zu entnehmende Werkstück 220a an die Saugfläche 21 der Saugeinheit 20a herangezogen wird.

Fig. 5d zeigt einen Zustand des am Industrieroboter 300 befestigten Robotergreifers 100, der Lagereinrichtung 200 und des chaotischen Stapels 210 nach der Durchführung des Verfahrensschritts: Anheben des Robotergreifers zusammen mit dem an der Saugfläche gehaltenen zu entnehmenden Werkstück.

### Bezugszeichen

- 10: Aufnahme
- 11: Aufnahmefläche
- 20: Saugeinheit
- 21: Saugfläche
- 30: Aktor
- 40: erstes Trägerelement
- 41: zweites Trägerelement
- 50: Saugöffnung
- 60: Federelement
- 70: Keilwelle
- 80: Keilwellennabe
- 90: Gelenk
- 100: Robotergreifer
- 110: Gelenk
- 140: Anpresskante
- 200: Lagereinrichtung
- 210: chaotischer Stapel
- 220: Werkstück
- 220a: mittiges Werkstück
- 220b: Randbereich-Werkstück
- 300: Industrieroboter

## Patentansprüche

1. Robotergreifer (100) mit einer Aufnahme (10), die dazu ausgebildet ist, mit einem Industrieroboter verbunden zu werden, und mit mindestens einer Saugeinheit (20), die dazu ausgebildet ist, mit einer Vakuumquelle verbunden zu werden, wobei die Saugeinheit (20) eine Saugfläche (21) aufweist, an der ein bevorzugt plattenförmiges Werkstück (220), das vorzugsweise zumindest abschnittsweise aus Holz, Holzwerkstoffen, Kunststoff, Aluminium oder dergleichen besteht, mittels Unterdruck gehalten werden kann, und wobei der Robotergreifer (100) in einem Randabschnitt eine im Wesentlichen gerade Anpresskannte aufweist, wobei der Robotergreifer (100) ferner einen Aktor (30) aufweist, der dazu ausgebildet ist, die Saugeinheit (20) gegenüber der Aufnahme (10) um eine erste Kippachse zu verkippen, **dadurch gekennzeichnet, dass** der Aktor (30) mit einem Federelement (60) in eine erste Nulllage vorgespannt ist, und bei dem der Aktor (30) dazu ausgebildet ist, bei Druckbeaufschlagung einen der Vorspannung entgegengesetzten, diskreten Hub auszuführen.

2. Robotergreifer (100) nach Anspruch 1, der mindestens zwei Saugeinheiten (20), aufweist, und bei dem eine erste Saugeinheit (20) in einer ersten Richtung bevorzugt länger ist als eine zweite Saugeinheit (20), wobei die Saugfläche (21) der ersten Saugeinheit (20) und die Saugfläche (21) der zweiten Saugeinheit (20) in derselben Ebene liegen, und wobei die erste und die zweite Saugeinheit (20) vorzugsweise bezüglich der ersten Richtung nebeneinander angeordnet sind, wobei die erste Saugeinheit (20) und die zweite Saugeinheit (20) eine Saugeinheitengruppe festlegen, wobei der Robotergreifer (100) eine Mehrzahl, bevorzugt jedoch zwei Saugeinheitengruppen aufweist, wobei die Saugflächen (21) der Saugeinheiten (20) der Mehrzahl von Saugeinheitengruppen in derselben Ebene liegen, und wobei die Saugeinheitengruppen bezüglich einer zweiten Richtung, die von der ersten Richtung verschieden ist und vorzugsweise senkrecht auf der ersten Richtung steht, nebeneinander angeordnet sind.

3. Robotergreifer (100) nach einem der vorstehenden Ansprüche, bei dem jede Saugeinheit (20) selektiv mit Unterdruck versorgt werden kann, und wobei der Robotergreifer (100) dazu ausgebildet ist, die Saugeinheit (20) gegenüber der Aufnahme (10) um einen Winkel zwischen jeweils einschließlich 0,1° und 35°, bevorzugt zwischen jeweils einschließlich 0,5° und 10° und besonders bevorzugt zwischen jeweils einschließlich 1° und 2° zu verkippen.

4. Robotergreifer (100) nach einem der vorstehenden Ansprüche, bei dem die Anpresskante (140) eine Kante zwischen der Saugfläche (21) und einer seitlichen Fläche der Saugeinheit (20) ist, die im Wesentlichen parallel zur ersten Kippachse verläuft, wobei die Anpresskante (140) bevorzugt mit einem Radius kleiner oder gleich 10 mm, und besonders bevorzugt mit einem Radius kleiner oder gleich 1 mm versehen ist.

5. Robotergreifer (100) nach einem der vorstehenden Ansprüche, der ferner ein Identifikationssystem aufweist, das dazu ausgebildet ist, Daten aus einem Identifikationsmittel eines Werkstücks (220) zu lesen, und wobei der Robotergreifer ferner ein Erkennungssystem aufweist, das dazu ausgebildet ist, die Größe und/oder Position von Werkstücken (220) und/oder Werkstückkanten zu erkennen.

6. Robotergreifer (100) nach einem der vorstehenden Ansprüche, der dazu ausgebildet ist, zu erkennen, ob die Anpresskante (140) mit einem Gegenstand in Kontakt steht, und der bevorzugt dazu ausgebildet ist, Informationen über die aus dem Kontakt resultierende Anpresskraft erlangen.

7. Robotergreifer (100) nach einem der vorstehenden Ansprüche, der zumindest zwei seriell verbundene Aktoren (30) aufweist, wobei jeder der zumindest zwei seriell verbundenen Aktoren (30) dazu ausgebildet ist, bei Druckbeaufschlagung einen der Vorspannung entgegengesetzten, diskreten Hub auszuführen, und wobei der Robotergreifer (100) derart ausgebildet ist, dass jeder der zumindest zwei seriell verbundenen Aktoren (30) selektiv mit Druck beaufschlagt werden kann, wobei der Robotergreifer (100) zumindest zwei parallel angeordnete Aktoren (30) aufweist, wobei jeder dieser zumindest zwei Aktoren (30) dazu ausgebildet ist, bei Druckbeaufschlagung einen der Vorspannung entgegengesetzten, diskreten Hub auszuführen, und wobei der Robotergreifer (100) derart ausgebildet ist, dass jeder der zumindest zwei parallel verbundenen Aktoren (30) selektiv mit Druck beaufschlagt werden kann.

8. Robotergreifer (100) nach einem der vorstehenden Ansprüche, derart ausgebildet, dass die mindestens eine Saugeinheit (20) um eine zweite Achse verkippbar ist, wobei die Saugeinheit (20) in Bezug auf die zweite Achse in eine zweite Nulllage vorgespannt ist, wobei die zweite Achse von der ersten Achse verschieden ist.

9. Industrieroboter (300), ausgebildet als Linearroboter mit zumindest zwei, bevorzugt jedoch drei rein translatorischen Freiheitsgraden und mit nicht mehr als zwei rotatorischen Freiheitsgraden, wobei der Industrieroboter (300) mit einem Robotergreifer (100) nach einem der vorstehenden Ansprüche versehen ist.

10. Verfahren zur Entnahme plattenförmiger Werkstücke (220), die bevorzugt zumindest abschnittsweise aus Holz, Holzwerkstoffen, Kunststoff, Aluminium oder dergleichen bestehen, von einem Stapel, mit den Schritten:
- Verfahren eines Robotergreifers (100) nach einem der Ansprüche 1 bis 8 in die Nähe eines zu entnehmenden Werkstücks (220), wobei das zu entnehmende Werkstück (220) vorzugsweise zwischen anderen Werkstücken (220) liegt;
- Verkippen der Saugeinheit (20), sodass die Saugfläche (21) gegenüber dem zu entnehmenden Werkstück (220) einen Winkel zwischen jeweils einschließlich 0,1° und 35°, bevorzugt zwischen jeweils einschließlich 0,5° und 10° und besonders bevorzugt zwischen jeweils einschließlich 1° und 2° einnimmt;
- Verfahren des Robotergreifers (100), sodass die Anpresskante (140) des Robotergreifers (100) im Wesentlichen auf einer Kante des zu entnehmenden Werkstücks (220) liegt;
- Beaufschlagen der Saugeinheit (20) mit Unterdruck, sodass das zu entnehmende Werkstück (220) an die Saugfläche (21) der Saugeinheit (20) herangezogen wird;
- Anheben des Robotergreifers (100) zusammen mit dem an der Saugfläche (21) gehaltenen zu entnehmenden Werkstück (220) .

11. Verfahren nach Anspruch 10, mit dem zusätzlichen Schritt: Zurückkippen der Saugeinheit (20), zusammen mit dem zu entnehmenden Werkstück (220), wobei bei dem der Schritt des Beaufschlagens der Saugeinheit (20) mit Unterdruck nach dem Schritt des Verkippens der Saugeinheit (20) durchgeführt wird.

12. Verfahren nach Anspruch 10 oder 11, mit dem zusätzlichen Schritt: Erfassen der Größe des Werkstücks (220) mit einem Erkennungssystem, das dazu ausgebildet ist, die Lage der Kanten des Werkstücks (220) zu erfassen, und/oder mit einem Identifikationssystem, das dazu ausgebildet ist, die Größe des Werkstücks (220) aus einem dem Werkstück (220) zugeordneten Identifikationsmittel zu lesen, wobei das Identifikationsmittel bevorzugt ein Barcode, ein QR-Code, oder ein vergleichbarer Code ist, und mit dem zusätzlichen Schritt: Bestimmen der Position der Kante eines Werkstücks (220) auf der Grundlage der Position eines dem Werkstück (220) zugeordneten Identifikationsmittels, wobei das Identifikationsmittel bevorzugt ein Barcode, ein QR-Code, oder ein vergleichbarer Code ist.

13. Verfahren nach Anspruch 12, mit den zusätzlichen Schritten:
- Auswahl einer für die Größe des zu entnehmenden Werkstücks (220) geeigneten Saugeinheit (20); oder Auswahl einer Kombination mehrerer für die Größe des zu entnehmenden Werkstücks (220) geeigneter Saugeinheiten (20) ;
- selektive Versorgung der ausgewählten Saugeinheit (20) oder der ausgewählten Saugeinheiten (20) mit Unterdruck, wobei die nicht ausgewählten Saugeinheiten (20) nicht mit Unterdruck versorgt werden.

14. Handhabungssystem, aufweisend einen Industrieroboter (300) nach Anspruch 9 und ein Messmittel, wobei das Handhabungssystem dazu ausgebildet ist, zu erkennen, ob mehrere Werkstücke (220) an einer Saugeinheit (20) des Robotergreifers (100) gehalten werden, wobei das Messmittel bevorzugt ein Flächenscanner ist.

## Claims

1. Robot gripper (100) having a holder (10) which is designed to be connected to an industrial robot, and having at least one suction unit (20) which is designed to be connected to a vacuum source, wherein the suction unit (20) comprises a suction surface (21) against which a preferably planar workpiece (220) that preferably consists at least in portions of wood, wood-based materials, plastics material, aluminium or the like can be held by means of negative pressure, and wherein the robot gripper (100) comprises a substantially straight pressing edge in an edge portion, wherein the robot gripper (100) further comprises an actuator (30) which is designed to tilt the suction unit (20) about a first tilt axis relative to the holder (10), **characterised in that** the actuator (30) is preloaded into a first neutral position by means of a spring element (60), and wherein the actuator (30) is designed to perform a discrete stroke counter to the preload when pressure is applied.

2. Robot gripper (100) according to claim 1, which comprises at least two suction units (20), and wherein a first suction unit (20) is preferably longer in a first direction than a second suction unit (20), wherein the suction surface (21) of the first suction unit (20) and the suction surface (21) of the second suction unit (20) lie in the same plane, and wherein the first and the second suction unit (20) are preferably arranged one next to the other with respect to the first direction, wherein the first suction unit (20) and the second suction unit (20) define a suction unit group, wherein the robot gripper (100) comprises a plurality of, but preferably two suction unit groups, wherein the suction surfaces (21) of the suction units (20) of the plurality of suction unit groups lie in the same plane, and wherein the suction unit groups are arranged one next to the other with respect to a second direction that is different from the first direction and that is preferably perpendicular to the first direction.

3. Robot gripper (100) according to any of the preceding claims, wherein each suction unit (20) can be selectively supplied with negative pressure, and wherein the robot gripper (100) is designed to tilt the suction unit (20) relative to the holder (10) by an angle of between 0.1° and 35° inclusive in each case, preferably between 0.5° and 10° inclusive in each case, and particularly preferably between 1° and 2° inclusive in each case.

4. Robot gripper (100) according to any of the preceding claims, wherein the pressing edge (140) is an edge between the suction surface (21) and a lateral surface of the suction unit (20) which extends substantially in parallel with the first tilt axis, wherein the pressing edge (140) is preferably provided with a radius of less than or equal to 10 mm, and particularly preferably with a radius of less than or equal to 1 mm.

5. Robot gripper (100) according to any of the preceding claims, which further comprises an identification system which is designed to read data from an identification means of a workpiece (220), and wherein the robot gripper further comprises a recognition system which is designed to recognise the size and/or position of workpieces (220) and/or workpiece edges.

6. Robot gripper (100) according to any of the preceding claims, which is designed to recognise whether the pressing edge (140) is in contact with an object, and which is preferably designed to obtain information about the pressing force resulting from the contact.

7. Robot gripper (100) according to any of the preceding claims, which comprises at least two actuators (30) connected in series, wherein each of the at least two actuators (30) connected in series is designed to perform a discrete stroke counter to the preload when pressure is applied, and wherein the robot gripper (100) is designed such that pressure can be selectively applied to each of the at least two actuators (30) connected in series, wherein the robot gripper (100) comprises at least two actuators (30) arranged in parallel, wherein each of said at least two actuators (30) is designed to perform a discrete stroke counter to the preload when pressure is applied, and wherein the robot gripper (100) is designed such that pressure can be selectively applied to each of the at least two actuators (30) connected in parallel.

8. Robot gripper (100) according to any of the preceding claims, designed such that the at least one suction unit (20) can be tilted about a second axis, wherein the suction unit (20) is preloaded into a second neutral position with respect to the second axis, wherein the second axis is different from the first axis.

9. Industrial robot (300), designed as a linear robot having at least two, but preferably three purely translational degrees of freedom and having no more than two rotational degrees of freedom, wherein the industrial robot (300) is provided with a robot gripper (100) according to any of the preceding claims.

10. Method for removing planar workpieces (220) that preferably consist at least in portions of wood, wood-based materials, plastics material, aluminium or the like, from a stack, having the steps of:
- moving a robot gripper (100) according to any of claims 1 to 8 into the vicinity of a workpiece (220) to be removed, wherein the workpiece (220) to be removed is preferably located between other workpieces (220) ;
- tilting the suction unit (20) such that the suction surface (21) assumes an angle, relative to the workpiece (220) to be removed, of between 0.1° and 35° inclusive in each case, preferably between 0.5° and 10° inclusive in each case, and particularly preferably between 1° and 2° inclusive in each case;
- moving the robot gripper (100) such that the pressing edge (140) of the robot gripper (100) lies substantially on an edge of the workpiece (220) to be removed;
- applying negative pressure to the suction unit (20), such that the workpiece (220) to be removed is drawn against the suction surface (21) of the suction unit (20) ;
- raising the robot gripper (100) together with the workpiece (220) to be removed that is being held against the suction surface (21).

11. Method according to claim 10, having the additional step of: tilting the suction unit (20) back, together with the workpiece (220) to be removed, wherein the step of applying negative pressure to the suction unit (20) is performed after the step of tilting the suction unit (20).

12. Method according to claim 10 or 11, having the additional step of: detecting the size of the workpiece (220) using a recognition system that is designed to detect the position of the edges of the workpiece (220), and/or using an identification system that is designed to read the size of the workpiece (220) from an identification means assigned to the workpiece (220), wherein the identification means is preferably a bar code, a QR code or a comparable code, and having the additional step of: determining the position of the edge of a workpiece (220) based on the position of an identification means assigned to the workpiece (220), wherein the identification means is preferably a bar code, a QR code or a comparable code.

13. Method according to claim 12, having the additional steps of:
- selecting a suction unit (20) that is suitable for the size of the workpiece (220) to be removed; or selecting a combination of multiple suction units (20) that are suitable for the size of the workpiece (220) to be removed;
- selectively supplying the selected suction unit (20) or selected suction units (20) with negative pressure, wherein the non-selected suction units (20) are not supplied with negative pressure.

14. Handling system, comprising an industrial robot (300) according to claim 9 and a measuring means, wherein the handling system is designed to recognise whether multiple workpieces (220) are held against a suction unit (20) of the robot gripper (100), wherein the measuring means is preferably an area scanner.

## Revendications

1. Pince de robot (100) avec un logement (10) qui est configuré afin d'être relié à un robot industriel, et avec au moins une unité d'aspiration (20) qui est réalisée afin d'être reliée à une source de vide, dans laquelle l'unité d'aspiration (20) présente une surface d'aspiration (21), au niveau de laquelle une pièce à travailler (220) de préférence en forme de plaque qui se compose de préférence au moins par sections de bois, de matériaux dérivés du bois, de matière plastique, d'aluminium ou similaires, peut être maintenue par dépression, et dans laquelle la pince de robot (100) présente dans une section de bord une arête de pressage sensiblement droite, dans laquelle la pince de robot (100) présente de plus un actionneur (30) qui est configuré afin de faire basculer l'unité d'aspiration (20) par rapport au logement (10) autour d'un premier axe de basculement, **caractérisée en ce que** l'actionneur (30) est précontraint avec un élément de ressort (60) dans une première position zéro, et pour laquelle l'actionneur (30) est configuré afin de réaliser lors de l'alimentation en pression une course discrète opposée à la précontrainte.

2. Pince de robot (100) selon la revendication 1, qui présente au moins deux unités d'aspiration (20), et pour laquelle une première unité d'aspiration (20) est de préférence plus longue dans une première direction qu'une seconde unité d'aspiration (20), dans laquelle la surface d'aspiration (21) de la première unité d'aspiration (20) et la surface d'aspiration (21) de la seconde unité d'aspiration (20) se trouvent dans le même plan, et dans laquelle la première et la seconde unité d'aspiration (20) sont de préférence agencées par rapport à la première direction l'une à côté de l'autre, dans laquelle la première unité d'aspiration (20) et la seconde unité d'aspiration (20) définissent un groupe d'unités d'aspiration, dans laquelle la pince de robot (100) présente une pluralité, de préférence toutefois deux groupes d'unité d'aspiration, dans laquelle les surfaces d'aspiration (21) des unités d'aspiration (20) de la pluralité de groupes d'unité d'aspiration se trouvent dans le même plan, et dans laquelle les groupes d'unité d'aspiration sont disposés les uns à côté des autres par rapport à une seconde direction qui est différente de la première direction et se trouve de préférence perpendiculaire à la première direction.

3. Pince de robot (100) selon l'une quelconque des revendications précédentes, pour laquelle chaque unité d'aspiration (20) peut être alimentée de manière sélective en dépression, et dans laquelle la pince de robot (100) est configurée afin de faire basculer l'unité d'aspiration (20) par rapport au logement (10) d'un angle entre respectivement 0,1° et 35° inclus, de préférence entre respectivement 0,5° et 10° inclus et le plus préférentiellement entre respectivement 1° et 2° inclus.

4. Pince de robot (100) selon l'une quelconque des revendications précédentes, pour laquelle l'arête de pressage (140) est une arête entre la surface d'aspiration (21) et une surface latérale de l'unité d'aspiration (20) qui s'étend sensiblement parallèlement au premier axe de basculement, dans laquelle l'arête de pressage (140) est de préférence pourvue d'un rayon inférieur ou égal à 10 mm, et le plus préférentiellement d'un rayon inférieur ou égal à 1 mm.

5. Pince de robot (100) selon l'une quelconque des revendications précédentes, qui présente de plus un système d'identification qui est configuré afin de lire des données d'un moyen d'identification d'une pièce à travailler (220), et dans laquelle la pince de robot présente de plus un système de reconnaissance qui est réalisé afin de reconnaître la grandeur et/ou position de pièces à travailler (220) et/ou arêtes de pièce à travailler.

6. Pince de robot (100) selon l'une quelconque des revendications précédentes, qui est configurée afin de reconnaître si l'arête de pressage (140) est en contact avec un objet, et qui est de préférence réalisée afin d'obtenir des informations sur la force de pressage résultant du contact.

7. Pince de robot (100) selon l'une quelconque des revendications précédentes, qui présente au moins deux actionneurs (30) reliés en série, dans laquelle chacun des au moins deux actionneurs (30) reliés en série est configuré afin de réaliser lors d'alimentation en pression une course discrète opposée à la précontrainte, et dans laquelle la pince de robot (100) est configurée afin que chacun des au moins deux actionneurs (30) reliés en série puisse être alimenté sélectivement en pression, dans laquelle la pince de robot (100) présente au moins deux actionneurs (30) disposés parallèlement, dans laquelle chacun de ces au moins deux actionneurs (30) est configuré afin de réaliser lors de l'alimentation en pression une course discrète opposée à la précontrainte, et dans laquelle la pince de robot (100) est réalisée de telle manière que chacun des au moins deux actionneurs (30) reliés parallèlement puisse être alimenté sélectivement en pression.

8. Pince de robot (100) selon l'une quelconque des revendications précédentes, configurée de telle manière que l'au moins une unité d'aspiration (20) soit basculable autour d'un second axe, dans laquelle l'unité d'aspiration (20) est précontrainte en ce qui concerne le second axe dans une seconde position zéro, dans laquelle le second axe est différent du premier axe.

9. Robot industriel (300), réalisé sous forme de robot linéaire avec au moins deux, de préférence toutefois trois, degrés de liberté purement en translation et avec pas plus de deux degrés de liberté en rotation, dans lequel le robot industriel (300) étant pourvu d'une pince de robot (100) selon l'une quelconque des revendications précédentes.

10. Procédé de retrait de pièces à travailler (220) en forme de plaque qui se composent de préférence au moins partiellement de bois, de matériaux dérivés du bois, de matière plastique, d'aluminium ou similaires, d'une pile, comprenant les étapes suivantes :
- le déplacement d'une pince de robot (100) selon l'une quelconque des revendications 1 à 8 à proximité d'une pièce à travailler (220) à retirer, dans lequel la pièce à travailler (220) à retirer se trouvant de préférence entre d'autres pièces à travailler (220) ;
- le basculement de l'unité d'aspiration (20) de sorte que la surface d'aspiration (21) occupe par rapport à la pièce à travailler (220) à retirer un angle entre respectivement 0,1° et 35° inclus, de préférence entre respectivement 0,5° et 10° inclus et le plus préférentiellement entre respectivement 1° et 2° inclus ;
- le déplacement de la pince de robot (100) de sorte que l'arête de pressage (140) de la pince de robot (100) se trouve sensiblement sur une arête de la pièce à travailler (220) à retirer ;
- l'application d'une dépression à l'unité d'aspiration (20), de sorte que la pièce à travailler (220) à retirer soit attirée vers la surface d'aspiration (21) de l'unité d'aspiration (20) ;
- le levage de la pince de robot (100) conjointement avec la pièce à travailler (220) à retirer maintenue au niveau de la surface d'aspiration (21).

11. Procédé selon la revendication 10, avec l'étape supplémentaire : le rebasculement de l'unité d'aspiration (20), conjointement avec la pièce à travailler (220) à retirer, dans lequel l'étape d'alimentation de l'unité d'aspiration (20) en dépression est réalisée selon l'étape de basculement de l'unité d'aspiration (20).

12. Procédé selon la revendication 10 ou la revendication 11, avec l'étape supplémentaire : la détection de la grandeur de la pièce à travailler (220) avec un système de reconnaissance qui est réalisé afin de détecter la position des arêtes de la pièce à travailler (220), et/ou avec un système d'identification qui est configuré afin de lire la grandeur de la pièce à travailler (220) d'un moyen d'identification associé à la pièce à travailler (220), dans lequel le moyen d'identification est de préférence un code-barre, un code QR ou un code comparable, et avec l'étape supplémentaire : la détermination de la position de l'arête d'une pièce à travailler (220) sur la base de la position d'un moyen d'identification associé à la pièce à travailler (220), dans lequel le moyen d'identification est de préférence un code-barre, un code QR ou un code comparable.

13. Procédé selon la revendication 12, avec les étapes supplémentaires :
- la sélection d'une unité d'aspiration (20) appropriée à la grandeur de la pièce à travailler (220) à retirer ; ou la sélection d'une combinaison de plusieurs unités d'aspiration (20) appropriées à la grandeur de la pièce à travailler (220) à retirer ;
- l'alimentation sélective de l'unité d'aspiration (20) sélectionnée ou des unités d'aspiration (20) sélectionnées en dépression, dans lequel les unités d'aspiration (20) non sélectionnées ne sont pas alimentées en dépression.

14. Système de manipulation présentant un robot industriel (300) selon la revendication 9 et un moyen de mesure, dans lequel le système de manipulation est configuré afin de reconnaître si plusieurs pièces à travailler (220) sont maintenues au niveau d'une unité d'aspiration (20) de la pince de robot (100), dans lequel le moyen de mesure est de préférence un scanner de surface.
